Europäisches Patentamt

European Patent Office

Office européen des brevets

(19)

(11) Veröffentlichungsnummer: **0 162 270**
**B1**

(12) **EUROPÄISCHE PATENTSCHRIFT**

(45) Veröffentlichungstag der Patentschrift:
13.07.88

(51) Int. Cl.⁴: **H 04 Q 11/04, H 04 Q 1/24**

(21) Anmeldenummer: 85104418.0

(22) Anmeldetag: 11.04.85

(54) Verfahren zur Durchschalteprüfung eines Raummultiplex-Koppelnetzes.

(30) Priorität: 19.04.84 DE 3414954

(43) Veröffentlichungstag der Anmeldung:
27.11.85 Patentblatt 85/48

(45) Bekanntmachung des Hinweises auf die Patenterteilung:
13.07.88 Patentblatt 88/28

(84) Benannte Vertragsstaaten:
AT BE CH DE FR GB IT LI NL SE

(56) Entgegenhaltungen:
EP - A - 0 027 226
EP - A - 0 034 776
FR - A - 2 233 779
US - A - 3 937 895

PATENTS ABSTRACTS OF JAPAN, Band 7, Nr. 45
(E-160)[1190], 23. Februar 1983; & JP - A - 57 196 653
(KOKUSAI DENSHIN DENWA K.K.) 02.12.1982

(73) Patentinhaber: Siemens Aktiengesellschaft Berlin und
München, Wittelsbacherplatz 2, D-8000 München 2 (DE)

(72) Erfinder: Knorpp, Eberhard, Dipl.-Ing.,
Zugspitzstrasse 26, D-8035 Gauting (DE)
Erfinder: Binz, Reiner, Dipl.-Ing., Rosenstrasse 5,
D-8021 Hohenschäftlarn (DE)
Erfinder: Trumpp, Gerhard, Dipl.-Ing.,
Ammerseestrasse 8, D-8027 Neuried (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Durchschalteprüfung eines Raummultiplex-Koppelnetzes.

Im Zuge einer solchen Durchschalteprüfung muß in erster Linie festgestellt werden, ob das Auftreten eines Durchschaltebefehls die Herstellung der entsprechenden Verbindung durch das Koppelfeld zur Folge hat und ob es dabei nicht zu Durchschaltungen gekommen ist, die zu Doppelverbindungen führen. Im Zusammenhang mit einer derartigen Prüfung soll es auch möglich sein, einen Durchschaltefehler in relativ engen Grenzen zu lokalisieren.

Bei einem bekannten Verfahren wird zum Zwecke einer solchen Durchschalteprüfung jeweils nach einer Durchschaltung bei der betreffenden Verbindung entsprechenden Anschlußeinrichtung des Koppelnetzes ein Prüfsignal eingespeist, woraufhin sämtliche Anschlußeinheiten des Koppelnetzes abgefragt werden, um daraufhin zu prüfen, ob nur bei der der betreffenden Verbindung entsprechenden Anschlußeinheit dieses Prüfsignals empfangen werden kann.

Auf diese Art und Weise ist es zwar möglich, jeweils neugeschaltete Verbindungen in ihrer Gesamtheit auf Durchschaltung und Doppelverbindung zu überprüfen und dabei sämtliche Fehlerkonstellationen zu erfassen. Das Verfahren, an dessen Durchführung ein zentrales Steuerwerk sowie wenigstens ein peripheres Steuerwerk beteiligt sind, führt allerdings zu relativ großen Verarbeitungszeiten und wegen der Interaktion zwischen dem zentralen Steuerwerk und den peripheren Steuerwerken zu einem großen Datenverkehr im Zuge der Durchführung der Prüfung und kann für größere Vermittlungsanlagen keine Verwendung finden.

Die Aufgabe der Erfindung besteht daher darin, ein demgegenüber einfacheres, den praktischen Notwendigkeiten besser entsprechendes Prüfverfahren anzugeben.

Erfindungsgemäß wird dies dadurch erreicht, daß jeweils die kleinsten von einer Teilsteuerung beeinflußten Teileinheiten eines solchen Koppelnetzes für sich im Zusammenhang mit jeder neu vorzunehmenden Durchschaltung in einem ersten Prüfdurchgang vor der Ausführung der Durchschaltung daraufhin überprüft werden, ob an dem der durchzuschaltenden Verbindung entsprechenden Ausgang der Teileinheit kein Ausgangssignal und an welchen übrigen Ausgängen ein Ausgangssignal auftritt, und in einem zweiten Prüfdurchgang nach der Ausführung der Durchschaltung daraufhin überprüft werden, ob an dem der durchgeschalteten Verbindung entsprechenden Ausgang nunmehr ein Ausgangssignal auftritt und ob die Verhältnisse bei allen übrigen Ausgängen unverändert geblieben sind, und daß eine Fehlermeldung dann abgegeben wird , wenn im ersten Prüfdurchgang ein Ausgangssignal an dem genannten einen Ausgang oder im zweiten Prüfdurchgang ein Fehlen eines Ausgangssignals an dem genannten einen Ausgang und/oder an den übrigen Ausgängen eine Veränderung der Verhältnisse gegenüber dem ersten Prüfdurchgang festgestellt wird, soweit für eine solche Veränderung nicht das zwischenzeitliche Auslösen einer Verbindung verantwortlich ist.

Bei Durchführung des erfindungsgemäßen Verfahrens entfällt die Einspeisung eines Prüfsignals am Koppelnetzeingang und die Überwachung auf das Auftreten dieses Prüfsignals am betreffenden Koppelfeldausgang. Die an den Teileinheiten des Koppelfeldes durchgeführten Prüfschritte können durch die Einstellsteuerungen dieser Teileinheiten veranlaßt werden, so daß die Zentralsteuerung durch den Prüfvorgang nicht belastet ist.

Der schaltungsmäßige Aufwand für die Durchführung des Verfahrens ist, wie sich aus der nachstehenden Beschreibung noch ergeben wird, relativ gering.

Gemäß einer weiteren Ausgestaltung der Erfindung werden bei festgestellten Fehlern eines oder mehrerer Ausgangssignale die in Frage kommenden Eingänge der Teileinheiten des Koppelnetzes auf das Anliegen eines Eingangssignals überprüft, wodurch es möglich ist, den Fehlerort noch weiter einzukreisen.

Wie schon angedeutet, läßt sich das erfindungsgemäße Verfahren mit einer relativ einfachen Schaltungsanordnung durchführen, die gemäß einer weiteren Ausgestaltung der Erfindung dadurch gekennzeichnet ist, daß jedem Ausgang oder jedem Ausgang und jedem Eingang der Teileinheiten des Koppelnetzes ein Signaldetektor zugeordnet ist, bzw. gemäß noch einer anderen Ausgestaltung der Erfindung dadurch, daß jeder Teileinheit des Koppelnetzes ein einziger Signaldetektor zugeordnet ist, der den Ausgängen der Teileinheit oder den Ausgängen und Eingängen der Teileinheit mittels eines Ausgangsmultiplexers (MA) bzw. eines Eingangsmultiplexers (ME) zuschaltber ist.

Nachstehend wird die Erfindung anhand eines Ausführungsbeispiels unter Bezugnahme auf eine Zeichnung näher erläutert.

In der Zeichnung zeigen:

Fig. 1 ein Raummultiplex-Koppelnetz, das aus einer Anzahl von Koppelfeldeinheiten aufgebaut ist.

Fig. 2 eine einzelne der Teileinheiten des Koppelnetzes gemäß Fig. 1 zusammen mit der erfindungsgemäß vorgesehenen, der Durchführung des erfindungsgemäßen Verfahrens dienenden Prüfschaltung.

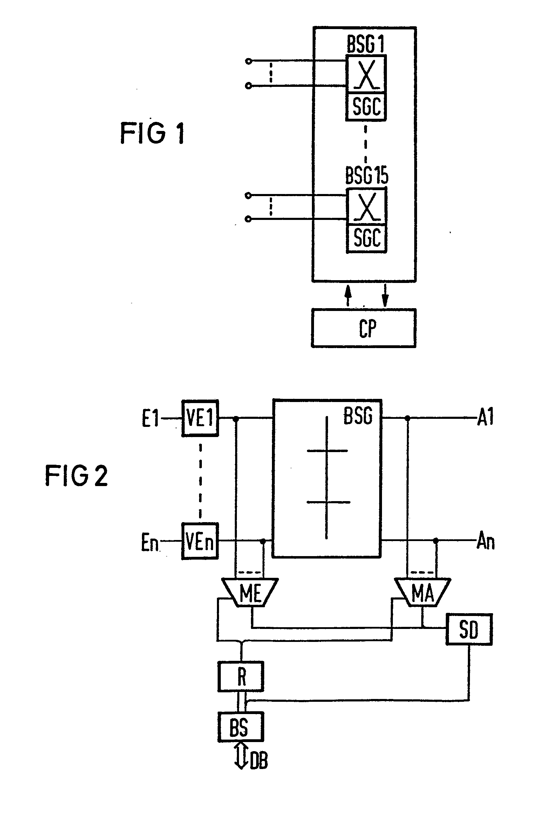

Die Figur 1 zeigt ein Raummultiplex-Koppelnetz, das beispielsweise der Durchschaltung von Breitbandsignalen in einem optischen Breitbandnetz (OBN), d.h. einem Netz sein kann, in dem zumindest die Übertragung zwischen der Teilnehmereinrichtung und der Vermittlungsstelle über Lichtwellenleiter erfolgt.

Das in Fig. 1 dargestellte Koppelnetz besteht aus beispielsweise 16 Koppelfeldteilen BSG, die jeweils einen eigenen Einstellprozessor SGC aufweisen, die mit einer zentralen Steuerung CP korrespondieren.

In der Fig. 2 ist nun eine der Teileinheiten BSG des Koppelnetzes dargestellt, die von einer Teilsteuerung gesondert beeinflußt werden können, und auf die jeweils für sich das erfindungsgemäße Verfahren angewendet wird. Die n Ausgänge A1 bis An dieser Teileinheit sind an die Eingänge eines Multiplexers MA angeschlossen, dessen Ausgang mit

dem Eingang eines Signaldetektors SD, der z.B. eine monostabile Kippstufe sein kann, in Verbindung steht. Das Ausgangssignal dieses Signaldetektors wird über eine Busschnittstelle BS einem Datenbus DB zugeführt, über den ein Datenverkehr mit dem im Zusammenhang mit der Fig. 1 erwähnten Einstellprozessor SGC stattfindet.

Die Fig. 2 zeigt ferner einen Multiplexer ME, dessen Eingänge mit jeweils einem der Eingänge E1 bis En der Teileinheit BSG verbunden sind und deren Ausgang ebenfalls an den Signaldetektor SD angeschlossen ist.

Die Eingänge E1 bis En der Teileinheit BSG sind über Eingangsverstärker VE1 bis VEn erreichbar, die jedoch nur dann erforderlich sind, wenn die Leitungen, über die die Informationen an das Koppelfeld herangeführt werden, eine bestimmte Länge übersteigen.

Weiterer Bestandteil der Anordnung gemäß Fig. 2 ist ein Register R, in das von der Einstellsteuerung her Adressen von Eingängen bzw. Ausgängen der Teileinheit BSG eingetragen werden können, durch die die Multiplexer ME bzw. MA zum Zwecke der Durchschaltung der Eingänge E1 bis En bzw. der Ausgänge A1 bis An auf den Signaldetektor SD angesteuert werden.

Anstelle der Multiplexer ME und MA und des einen Signaldetektors SD können auch jedem der n Ausgänge und jedem der n Eingänge ein gesonderter Signaldetektor zugeordnet sein.

Das erfindungsgemäße Verfahren wird, wie schon angedeutet, in zwei Prüfdurchgängen ausgeführt.

In einem ersten Prüfdurchgang, der vor der Ausführung einer bestimmten Durchschaltung liegt, wird der der betreffenden Durchschaltung entsprechende Ausgang daraufhin überprüft, ob ein Ausgangssignal auftritt. Wird wider Erwarten an dem betreffenden Ausgang ein Ausgangssignal festgestellt, so ist dies ein Zeichen dafür, daß bei einer vorhergehend erfolgten Durchschaltung eine fehlerhafte Doppelverbindung entstanden ist, woraufhin ein Fehlersignal abgegeben wird.

In dem genannten ersten Prüfdurchgang werden auch die übrigen Ausgänge auf das Auftreten von Ausgangssignalen überwacht, wobei deren Zustand davon abhängt, ob sie im Zuge einer vorangegangenen Durchschaltung belegt worden sind oder nicht. Der im ersten Prüfdurchgang festgestellte Zustand aller Ausgänge wird über den genannten Datenbus an einen nichtdargestellten Zustandsspeicher signalisiert und dort gespeichert.

Der zweite Prüfdurchgang erfolgt, nachdem die betreffende Verbindung durchgeschaltet worden ist. Im fehlerfreien Zustand muß an dem betreffenden Ausgang nunmehr ein Ausgangssignal erscheinen, bei den anderen Ausgängen darf sich der Belegungszustand gegenüber dem ersten Prüfdurchgang nicht geändert haben, sofern nicht eine bis dahin bestehende Vebindung zwischenzeitlich ausgelöst worden ist, ein Umstand, der bei der Auswertung des Prüfungsergebnisses jedoch berücksichtigt werden kann.

Ist in diesem Prüfdurchgang ein als Fehler zu wertendes Ergebnis festgestellt worden, das zu einer entsprechenden Fehlermeldung führt, dann kann durch Durchschaltung eines bestimmten Eingangs oder nacheinander mehrerer Eingänge des Koppelvielfachs über dem Multiplexer ME auf den Signaldetektor festgestellt werden, ob überhaupt ein Eingangssignal an die Teileinheit gelangt ist. Bei diesem Eingangssignal handelt es sich entweder um die Nutzinformation einer Verbindung oder im Falle der Zugehörigkeit des Raummultiplexkoppelfeldes zu einem Fernmeldenetz, bei dem die Informationsübertragung einer Pulsrahmenstruktur unterworfen ist, um ein periodisch auftretendes Rahmenkennungswort.

Mit dem vorstehend geschilderten Verfahren können praktisch alle auftretenden Durchschaltefehler erfaßt werden mit Ausnahme des Sonderfalls, daß die Durchschaltung einer neuen Verbindung zur Entstehung einer Doppelverbindung und gleichzeitig dazu führt, daß eine ursprünglich zu dem von der Doppelverbindung betroffenen Ausgang von einem anderen Eingang herkommende Verbindung aufgetrennt wird. Abgesehen davon, daß eine derartige Konstellation selten sein wird, würde mit hoher Wahrscheinlichkeit die Quelle für einen solchen Fehler im Rahmen der Überprüfung nachfolgender anderer Verbindungskonstellationen aufgedeckt. Es kann aber auch daran gedacht werden, die erfindungsgemäße Prüfungsmethode mit einer Routinemethode der eingangs erwähnten Art unter Verwendung der Aussendung eines Prüfcodewortes zu kombinieren, wobei diese Routineprüfung dann in entsprechend großen Abständen durchgeführt werden könnte, so daß die hiermit verbundene Rechnerbelastung noch hingenommen werden kann.

**Patentansprüche**

1. Verfahren zur Durchschalteprüfung eines Raummultikomplex-Koppelnetzes, dadurch gekennzeichnet, daß jeweils die kleinsten von einer Teilsteuerung (SGC) gesondert beeinflußten Teileinheiten (BSG) eines solchen Koppelnetzes für sich im Zusammenhang mit jeder neu vorzunehmenden Durchschaltung in einem ersten Prüfdurchgang vor der Ausführung der Durchschaltung daraufhin überprüft werden, ob an dem der durchzuschaltenden Verbindung entsprechenden Ausgang der Teileinheit kein Ausgangssignal und an welchen übrigen Ausgängen ein Ausgangssignal auftritt, und in einem zweiten Prüfdurchgang nach der Ausführung der Durchschaltung daraufhin überprüft werden, ob an dem der durchgeschalteten Verbindung entsprechenden Ausgang nunmehr ein Ausgangssignal auftritt und ob die Verhältnisse bei allen übrigen Ausgängen unverändert geblieben sind, und daß eine Fehlermeldung dann abgegeben wird, wenn im ersten Prüfdurchgang ein Ausgangssignal an dem genannten einen Ausgang oder im zweiten Prüfdurchgang ein Fehlen eines Ausgangssignals an dem genannten einen Ausgang und/oder an den übrigen Ausgängen eine Veränderung der Verhältnisse gegenüber dem ersten Prüfdurchgang festgestellt wird, soweit für eine solche Veränderung nicht das zwischenzeitliche Auslösen einer Verbindung verantwortlich ist.

2. Verfahren nach Anspruch 1, dadurch gekennzeichnet, daß bei festgestelltem Fehlen eines oder mehrerer Ausgangssignale zumindest die in Frage kommenden Eingänge (E1 bis En) der Teileinheiten (BSG) des Koppelnetzes auf das Anliegen eines Eingangssignals überprüft werden.

## Claims

1. A method of testing switching operations in a space-division multiplex switching network, characterised in that in association with each new switching operation which is to be carried out, the smallest subsidiary units (BSG) of such a switching network which are separately influenced by a subsidiary control unit (SGG) are each independently tested in a first test procedure prior to the execution of the switching operation to determine that no output signal occurs at that output of the subsidiary unit which corresponds to the connection which is to be switched, and at which other outputs and output signal occurs, and are then tested in a second test procedure following the execution of the switching operation to determine whether an output signal now occurs at the output which corresponds to the switched connection and whether the conditions at all the other outputs have remained unchanged, and that a fault message is emitted if in the first test procedure an output signal is detected at the aforementioned first output, or in a second test procedure the absence of an output signal at the aforementioned first output and/or a change in the conditions in comparison to the first test procedure is detected at the other outputs unless the intervening clearance of a connection is responsible for such a change.

2. A method as claimed in claim 1, characterised in that when a fault is detected in one or more than one output signal, at least the inputs in question (E1 to En) of the subsidiary units (BSG) of the switching network are checked for the presence of an input signal.

## Revendications

1. Procédé pour contrôler l'interconnexion directe dans un réseau de couplage à multiplexage spatial, caractérisé par le fait qu'on vérifie respectivement les plus petites unités partielles (BSG), qui sont influencées séparément par une unité partielle de commande (SGC), d'un tel réseau de couplage en soi en liaison avec chaque interconnexion directe devant être à nouveau réalisée, au cours d'une première étape de contrôle avant la réalisation de l'interconnexion directe pour savoir si aucun signal de sortie n'apparaît à la sortie de l'unité partielle, qui correspond à la liaison devant être interconnectée, et sur quelles autres sorties un signal de sortie apparaît, et on vérifie, lors d'une seconde étape de contrôle, après l'exécution de l'interconnexion directe, si le signal de sortie apparaît alors sur la sortie correspondant à la liaison interconnectée et si les conditions sont restées inchangées sur toutes les autres sorties, et qu'une signalisation d'erreur est délivrée lorsque, lors de la première étape de contrôle, on détecte la présence d'un signal de sortie sur ladite première sortie ou que, lors de la seconde étape de contrôle, on détecte l'absence d'un signal de sortie détecté sur ladite première sortie et/ou au niveau des autres sorties, c'est-à-dire s'il existe une modification des conditions par rapport à la première étape de contrôle, dans la mesure où ce n'est pas l'interruption intervenue entre-temps d'une liaison qui est responsable d'une telle modification.

2. Procédé suivant la revendication 1, caractérisé par le fait que dans le cas de la détection de l'absence d'un ou de plusieurs signaux de sortie, au moins les entrées concernées (E1 à En) des unités partielles (BSG) du réseau de couplage sont testées pour savoir si un signal d'entrée est présent.

FIG 1

FIG 2